Europäisches Patentamt

European Patent Office

Office européen des brevets

(19)

(11) Publication number: **0 042 145**
**B1**

(12) **EUROPEAN PATENT SPECIFICATION**

(45) Date of publication of patent specification: **17.09.86**

(51) Int. Cl.⁴: **A 61 C 13/34**

(21) Application number: **81104502.0**

(22) Date of filing: **11.06.81**

(54) **Dowel pin.**

(30) Priority: **14.06.80 JP 83422/80 u**

(43) Date of publication of application:
**23.12.81 Bulletin 81/51**

(45) Publication of the grant of the patent:
**17.09.86 Bulletin 86/38**

(84) Designated Contracting States:
**AT BE CH DE FR GB IT LI LU NL SE**

(56) References cited:
**AT-B- 182 819**
**BE-A- 643 278**
**DE-A-2 740 471**
**DE-C- 828 283**
**DE-U-1 964 325**
**DE-U-7 112 381**
**GB-A-1 338 447**
**US-A-3 931 677**
**US-A-4 127 939**
**US-A-4 139 943**

(73) Proprietor: **COLPO COMPANY LIMITED**
**No. 11-5, 2-chome, Kyobashi Chuo-ku**
**Tokyo (JP)**

(72) Inventor: **Imaizumi, Hiroo**
**No.27-25-704, 3-chome, Toyo Koto-ku**
**Tokyo (JP)**

(74) Representative: **Klingseisen, Franz, Dipl.-Ing.**
**et al**
**Dr. F. Zumstein sen. Dr. E. Assmann Dr. R.**
**Koenigsberger Dr. F. Zumstein jun. Dipl.-Ing. F.**
**Klingseisen Bräuhausstrasse 4**
**D-8000 München 2 (DE)**

Courier Press, Leamington Spa, England.

## Description

The invention refers to a dental dowel pin according to the preamble of claim 1.

DE—C—828 283 discloses a metallic dental dowel pin for connecting a crown with the root of a tooth. The dowel pin has a passage running centrally through its entire length, which passage is provided as a guide means for a drilling tool. A second passage is provided for inserting a needle so that the crown cannot be rotated.

Further DE—U—7 112 381 describes a metal dowel pin with a through passage at its center for inserting a needle which holds the pin in place. The pointed end portion of the needle acts as an extension of the base part of the pin.

Finally US—A—4 139 943 shows a dowel pin with an auxiliary foot but without any passage.

For implanting a dowel pin into hardened plaster, adhesive is poured into an inserting hole prepared in advance therein. This is followed by insertion of the pin, but then the adhesive often overflows as there is no escape for the adhesive and air from the blind pin hole. When putting water on the overflow adhesive, it turns up and spoils the precision of the model.

The dowel pin is often implanted before the primary plaster becomes hardened, and in this case not only is it difficult to insert the pin into the tooth model at its center portion but also the pin often falls down due to the greater specific gravity of the metallic pin compared to that of the plaster. Therefore to prevent falling, a dowel pin equipped with a needle is made to stand directly in a tooth impression surface as the primary plaster is poured. After removing the impression surface, the needle projects from the surface of the hardened plaster, i.e., the surface of the tooth model. This projection has to be removed. However, it is very difficult to undertake this removal without damaging the surface of the tooth model. In addition, such dowel pins with needles are expensive. There are other ways of controlling the needle falling, but those are unsatisfactory as to ease of use and reliability.

The prior art dowel pins are metallic. The part acting as a female model to the dowel pin is the plaster, and there is a big difference in hardness between the metal and the plaster. During many repetitions of removal and attachment of the tooth model, the plaster's inner surface at the inserting hole is effectively ground down which reduces the precision of the model, so that the final placing relationship of the tooth model to the denture model is out of register. Thus, the crown or bridge fitting the teeth precisely does not result. Further, if the dowel pin were often cut or ground in error while trimming, the interior of the inserting hole of the secondary plaster would be damaged by burr caused by the expansibility of the metal. In addition, metallic pins are susceptible to rusting by contact with plaster.

It is the object of the invention to provide a dowel pin as mentioned in the preamble of claim 1 in such a way that the pin may be easily and exactly implanted in a tooth model at its center irrespective of repetitions of implantation or any other potentially disruptive working condition. Further the model precision should be maintained without damaging the plaster even after many repetitions of attaching and removing the tooth model to and from the denture model and without causing any disorder of the attaching position of the tooth model in the denture model. The adhesive should not overflow at the implantation site into the hardened plaster model nor damage the precision of the implant. Furthermore the dowel pin should not fall down if standing in unhardened plaster and it should be removable from a denture model without deforming the continuous wax pattern.

According to the invention this object is solved by the features in the characterizing part of claim 1. Due to its relatively light weight the dowel pin can float in adhesive put into a prepared opening in the already hardened model so that it stands in place without the need for any additional wires or the like such as is taught by DE—U—7 112 381. The passage permits the escape of air and excess adhesive so that the external surfaces of the pin and its juncture with the remainder of the dental model are not adversely effected. The flow friction property of the pin allows smooth insertion and extraction.

Examples of embodiments according to the invention are described in more detail in connection with the drawings.

Fig. 1 is a front view showing one example of the invention,

Fig. 2 is a side view thereof,

Fig. 3 is a top plan view thereof,

Fig. 4 is a front view of another embodiment of the invention,

Fig. 5 is a front view of a further embodiment of the invention,

Fig. 6 is a plan view of the Fig. 5 embodiment,

Fig. 7 is a front view of a receptacle to be used integrally together with the embodiment shown in Fig. 5, and

Fig. 8 is a side view of the Fig. 7 receptacle.

The dowel pin is provided with a passage at its center vertically running through its full length. The inventive dowel pin can be of any shape such as frustro-conical, tubular, plate or other, so long as it is removable, and it does not always have to be different as to the head and the pin body.

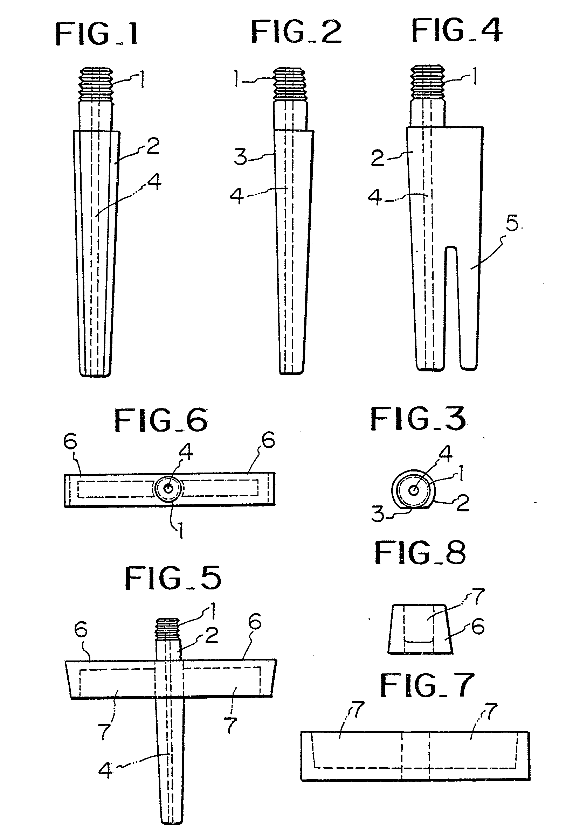

Fig. 1 to 3 show one embodiment of the invention which would be most generally used. This is composed of a bar-like head 1 to be implanted in the tooth model (primary plaster) and a pin body, a major portion of which is supported in the denture model (secondary plaster). The pin body 2 tapers moderately and has one or both sides 3 flattened as by grinding, and is provided with a passage 4 at its center vertically running from the head 1 through the full length. The dowel pin is made of hard plastics and formed by mixing glass beads into polyacetal resin. By forming the passage 4 as mentioned above, when the dowel pin is implanted at its head into the hardened model of the primary plaster which holds an instantaneously hardenable adhesive therein, the excess adhesive and the air can escape via the passage 4 and not excess flow outside the passage in the primary plaster.

Fig. 4 illustrates another embodiment of the dowel pin having an auxiliary foot 5 which is in general thinner than the pin body 2. The auxiliary foot serves to check rotation of the dowel pin and to exactly replace the tooth model having been once removed from the denture model. Using this embodiment, it is no longer necessary to form rotation checking grooves in the primary plaster on its reverse side, as is often done using conventional ones.

Figs. 5 to 8 depicts a further embodiment. This dowel pin is furnished with wings 6, and it is used for removing adjacent and plural teeth models together. For applying it to the hardened plaster, it is implanted at its head in the plaster and the wings 6 are attached to the plurality of the teeth models on these bottoms, and the secondary plaster is poured in. This pin is useful in such a case that the continuous wax pattern is removed from the denture model, and if the pin 2 is merely moved upwardly, the adjacent and plural teeth models may be removed together from the denture model. Thus, the wax pattern does not need partial and vertical fluctuation for removal and it is prevented from deformation. For using it with not yet hardened and with soft plaster, the wings 6 are modified with receptacles 7 and the pin is implanted such that part of the receptacle 7 is held in the primary plaster, and the secondary plaster is poured into to hold the receptacle 7. This receptacle 7 is available in the hardened plaster. That is, by the receptacle 7, the dowel pin with the wings is more smoothly removed.

The passage 4 serves to avoid overflowing of the adhesive at implantation of the dowel pin into the hardened plaster. A guide needle is pierced into the tooth model at its center of the impression surface and this guide needle is passed into the passage 4, thereby enabling the dowel pin to stand. In this case, a part of the needle is a bit exposed at the bottom of the pin 2, and the primary plaster is poured in. After hardening the guide needle is drawn out from the bottom of the pin. Such a method may exactly position the dowel pin centrally of the tooth model and may cancel the very difficult work that cuts the needle projecting on the surface of the tooth model without injuring the tooth model.

Further, the dowel pin according to the invention is made of the hard plastics, polyacetal resin, and has other merits than above mentioned. First of all, being light in weight, it does not fall down if it is applied to the non-hardened plaster. The instant dowel pin is perfectly mirror-finished. Swirly lines are always left all over the surfaces of prior art metallic pins in their manufacturing steps. However, the present dowel pin has a smooth surface and no chance of rusting. The polyacetal resin is a crystalline high polymer excellent in mechanical strength with little friction and little abrasion and having as strong an elasticity as iron or steel. Owing to this low friction property the pin may be smoothly inserted and extracted, and it displays its merits especially when removing the pattern of one-piece bridges, or carrying out double implantations. Since it has elasticity to a certain extent, the pin can be inserted and extracted without breaking the model when the pins are not implanted perfectly in parallel. Furthermore, when the denture model is set on the articulating machine and opened at jaws, and if the metallic dowel pin were then used on the tooth model of the upper jaw, the tooth model would drop owing to its own weight. However with the light weight hard plastic dowel pin of the invention, such dropping does not happen in spite of its low friction property.

## Claims

1. Dental dowel pin, said dowel pin being formed of a hard material with a through passage (4) running centrally through its entire length, characterized in that the dowel pin is made of polyacetal resin mixed with glass beads and having a smooth mirror-like surface with little friction and little abrasion characteristics.

2. Dowel pin according to claim 1, characterized in that an auxiliary foot (5) is provided at the side of the pin body.

3. Dowel pin according to claim 1, characterized in that wings (6) are provided which have receptacles (7).

4. Dowel pin according to claim 1, characterized in that the pin body tapers moderately and is flattened on one side longitudinally.

5. The use of a dowel pin according to claim 1 in a method of making dental models comprising the steps of forming an opening in an already hardened denture model larger than the corresponding portion of said dowel pin to be received in said opening, inserting a suitable adhesive into said opening and standing said dowel pin into said adhesive in said opening; whereby said dowel pin due to its relatively light weight stands in said adhesive and in said opening is without any additional support, and whereby all of the trapped air and any excessive adhesive escapes into said opening when said dowel pin is implanted in said adhesive in said opening rather than overflowing to the outside of said dowel pin onto said model.

## Patentansprüche

1. Dental-Paßstift, der aus einem harten Material geformt ist und einen zentralen Durchgang (4) über seine ganze Länge aufweist, dadurch gekennzeichnet, daß der Paßstift aus einem Polyacetal-Harz vermischt mit Glasperlen besteht und eine glatte spiegelähnliche Oberfläche mit niedrigen Reibungs- und Abriebeigenschaften aufweist.

2. Paßstift nach Anspruch 1, dadurch gekennzeichnet, daß an der Seite des Stiftkörpers ein Hilfsfuß (5) vorgesehen ist.

3. Paßstift nach Anspruch 1, dadurch gekennzeichnet, daß Flügel (6) vorgesehen sind, welche Behältnisse (7) aufweisen.

4. Paßstift nach Anspruch 1, dadurch gekennzeichnet, daß sich der Stiftkörper mäßig verjüngt und auf einer Seite der Länge nach abgeflacht ist.

5. Verwendung eines Paßstiftes nach Anspruch 1 in einem Verfahren für die Herstellung von Zahnmodellen, das die folgenden Schritte umfaßt: Ausbildung einer Öffnung in dem bereits gehärteten Zahnmodell, die größer ist als der entsprechende Paßstiftteil, der in der Öffnung aufgenommen werden soll, Einbringen eines geeigneten Klebemittels in die Öffnung und Einsetzen des Paßstiftes in das Klebemittel in der Öffnung, wobei der Paßstifte aufgrund seines relativ geringen Gewichtes in der Öffnung ohne zusätzliche Unterstützung in dem Klebemittel steht und wobei die gesamte eingeschlossene Luft und das gesamte überschüssige Klebemittel in die Öffnung entweicht, wenn der Paßstifte in das Klebemittel eingesetzt wird, anstatt an der Außenseite des Paßstiftes auf das Modell überzufließen.

**Revendications**

1. Cheville dentaire, cette cheville étant constituée d'un matériau dur avec un passage traversant (4) courant au centre sur la totalité de sa longueur, caractérisée en ce que:

— la cheville est en résine polyacétal mélangée avec des perles de verre et ayant une surface lisse ressemblant à un miroir qui présente des caractéristiques de faible friction et de faible abrasion.

2. Cheville selon la revendication 1, caractérisée en ce qu'un pied auxiliaire (5) est prévu au côté du corps de la cheville.

3. Cheville selon la revendication 1, caractérisée en ce que des ailes (6) sont formées qui présentent des réceptacles (7).

4. Cheville selon la revendication 1, caractérisée en ce que le corps de la cheville a une forme modérément conique et est aplatie longitudinalement sur un côté.

5. Emploi de la cheville selon la revendication 1, dans un procédé de fabrication de modèles dentaires, comprenant les étapes de formation d'une ouverture dans un modèle de denture déjà durci plus grand que la partie correspondante de la cheville devant être reçue dans ladite ouverture, d'insertion d'un adhésif approprié dans l'ouverture et de maintien de la cheville dans l'adhésif à l'intérieur de l'ouverture; d'ou il résulte que la cheville par suite de son poids relativement faible se tient debout dans l'adhésif et dans l'ouverture sans support supplémentaire, et que la totalité de l'air emprisonné et tout adhésif en excès s'échappent pour entrer dans l'ouverture lorsque la cheville est implantée dans l'adhésif à l'intérieur de l'ouverture au lieu de déborder vers l'extérieur de la cheville pour tomber sur le modèle.

0 042 145

FIG_1   FIG_2   FIG_4

FIG_6   FIG_3

FIG_5   FIG_8

FIG_7